Europäisches Patentamt

European Patent Office

Office européen des brevets

(11) Publication number: **0 238 330**
**A2**

## (12) EUROPEAN PATENT APPLICATION

(21) Application number: **87302348.5**

(22) Date of filing: **18.03.87**

(51) Int. Cl.⁴: **B 01 F 17/00**
**A 23 L 1/035**

(30) Priority: **19.03.86 GB 8606714**

(43) Date of publication of application:
**23.09.87 Bulletin 87/39**

(84) Designated Contracting States:
**AT BE CH DE ES FR GB IT LI LU NL SE**

(71) Applicant: **THE BRITISH FOOD MANUFACTURING INDUSTRIES RESEARCH ASSOCIATION**
**Randalls Road**
**Leatherhead Surrey KT22 7RY (GB)**

(72) Inventor: **Marrs, William Michael**
**8 Newlands Road**
**Horsham West Sussex (GB)**

(74) Representative: **Fisher, Bernard et al**
**Raworth, Moss & Cook 36 Sydenham Road**
**Croydon Surrey CR0 2EF (GB)**

(54) Modified emulsifiers, particularly for foods.

㉗ The present invention relates to modified emulsifiers particularly but not exclusively for foods and beverages.

In accordance with the present invention there is provided an emulsifier having at least one ionisable chemical group therein, such that in an aqueous solution the emulsifier carries a charge of one sign, characterised in that the emulsifier has been modified by the binding thereto of a polysaccharide stabiliser having at least one ionisable chemical group therein, such that in an aqueous solution the stabiliser carries a charge of the opposite sign.

It has been found that the method of formation of the modified stabiliser can be critical since some interactions appear not to extend across lipid/water interfaces.

Furthermore the presence of salts and acid components can adversely affect the formation of the modified stabilisers. Thus these components should generally be added later.

The modified emulsifiers is useful as, or in, foods and beverages, and also industrially for example in drilling mud compositions.

**Description**

MODIFIED EMULSIFIERS PARTICULARLY FOR FOODS

The present invention relates to modified emulsifiers particularly but not exclusively for foods and beverages.

Lipid/water emulsions are usually produced with the aid of mixtures of emulsifiers and stabilisers. Emulsifiers are molecules with both lipophilic and hydrophilic regions which have surface active properties. They are adsorbed at the interface of two-phase systems, reduce interfacial tension, and facilitate the dispersion of one phase within the other. Orientation of the emulsifier molecules in the interfacial region provides the dispersed particles or droplets with a surface charge which helps prevent coalescence by a mechanism of charge repulsion. To this extent, emulsifiers are able to prevent phase separation which occurs because of the difference in the densities of the two phases. It is the function of the stabiliser to prevent phase separation. Stabilisers are generally hydrophilic biopolymers (usually polysaccharides) with the ability to form supportive networks in an aqueous medium. They produce aqueous systems with yield properties at low concentration. Their yield strengths can be arranged to be sufficiently large to prevent the movement of dispersed phase within the continuous phase, and thereby inhibit creaming and coalescence.

In general, emulsifiers and stabilisers are assumed to function independently of each other, and no evidence has been presented to date which suggests that polysaccharide stabilisers can influence the emulsifying properties of emulsifiers or vice versa. It has now been found that certain emulsifiers can interact with certain stabilisers to produce modified emulsifiers with improved emulsifying properties.

In accordance with the present invention there is provided an emulsifier having at least one ionisable chemical group therein, such that in an aqueous solution the emulsifier carries a charge of one sign, characterised in that the emulsifier has been modified by the binding thereto of a polysaccharide stabiliser having at least one ionisable chemical group therein, such that in an aqueous solution the stabiliser carries a charge of the opposite sign.

The present invention also provides aqueous emulsions, particularly foods and beverages for human consumption, consisting of or comprising a modified emulsifier as described in the immediately preceding paragraph.

The present invention further provides a method of forming a modified emulsifier as described in the immediately preceding paragraph but one, which method comprises combining together in an aqueous medium, preferably in the absence of oil or fat, (a) an emulsifier having at least one ionisable chemical group therein, such that in an aqueous solution the emulsifier carries a charge of one sign, with (b) a polysaccharide stabiliser having at least one ionisable chemical group therein, such that in an aqueous solution the stabiliser carries a charge of the opposite sign.

The present invention additionally provides a method of making an aqueous emulsion, especially one suitable as, or as the basis for, a food or beverage particularly for human consumption, which method comprises intimately mixing together a modified emulsifier formed by a method as described in the immediately preceding paragraph with an oil or fat.

The invention relates to mixtures of charged emulsifiers with polysaccharide stabilisers carrying an opposite charge. It is not necessary for the whole molecule of the emulsifier or of the stabilizer to carry an overall net charge in order to be operable in the present invention, as long as there is on the molecule at least one localised charge with which another molecule with an overall net or similarly localised charge of the opposite sign can interact. Such a localised charge can be globally neutralised by an equal and opposite charge elsewhere on the same molecule, as in the case of a zwitterion, but still be effective. As will be apreciated by those skilled in the art, with large molecules the strength of interactions of the type involved in the present invention will depend on the charge density on the molecule as perceived by another molecule. Thus with only a few charged groups on a large molecule, the interaction will be very weak. Similarly weak interactions will occur if the charges are spread thinly over the length of the molecule, particularly if interspersed with counter-charges. The manifestation of such interactions, including binding, will depend on the strength thereof, and thus for weak interactions there will be virtually no manifestation thereof. To all intents and purposes therefore such weak interactions are considered not to exist and therefore be outside the scope of this invention. As will be appreciated, it is not possible to define precisely when such interactions become so weak as to be negligible, but considering numbers of charges with a large polysaccharide molecule this would probably occur if less than about one in one hundred of the recurring units carries a charge. Interactions are certainly noticeable if more than one in ten of the recurring units carries a charge, and in the preferred embodiment of this invention the polysaccharides carry at least one charge on every three recurring units.

Interactions between the oppositely charged groups on the molecules produce emulsifier/stabiliser complex systems of unique structure and functional properties. Although the scope of this invention is not to be limited by theoretical considerations, it is believed that the lipophilic region of the emulsifier molecule is linked through these oppositely charged groups to a hydrophilic polysaccharide producing a lipopolysaccharide complex. Binding of the polysaccharide to the emulsifier alters the lipophilic/hydrophilic balance of the latter and enhances its capacity for producing stable oil-in-water emulsions. Furthermore, the polysaccharide component can be chosen so as to participate in network formation in the aqueous phase in order to stabilise the disperse system against phase separation. The overall result is an emulsifier/stabiliser system with a greatly enhanced capacity for producing stable dispersions and emulsions in an aqueous phase.

In the preferred embodiments of the present invention, it is the emulsifier which carries the positive charge and the stabiliser which carries the negative charge.

One example of an emulsifier useful in the present invention, particularly for foods and beverages, is lecithin, e.g. soybean lecithin. Soybean lecithin is a mixture of phospholipids typically consisting of phosphatidyl choline (20-23%), phosphatidyl ethanolamine (21-24%) and phosphatidyl inositol (18-22%). (All percentages herein are expressed as weight percent.) These phospholipids are diglycerides linked through phosphate to either choline, ethanolamine or inositol. They are predominantly lipophilic, are practically insoluble in water but compatible with fats and oils. Their surface active properties derive from their hydrophilic groups (phosphate, choline, ethanolamine and inositol) and they are used extensively in fat-based foods and as dispersing aids for instant dry powder products. They are able to interact through their positively charged choline and ethanolamine groups with negatively charged polysaccharide stabilisers. Examples of such stabilisers suitable for use in the present invention are: pectins, alginates, carrageenans, arabic, tragacanth, xanthan and carboxymethyl-cellulose. One suitable negatively charged polysaccharide stabiliser for foods is a carrageenan.

Carrageenans are sulphated galactans which are extracted from red seaweeds belonging to the families Gigartinaceae and Solieraceae. They are based on repeating units of l,3-linked galactopyranose and l,4-linked-3,6-anhydrogalactopyranose, and vary in sulphate content. There are three principal types of carrageenan of commercial importance. These are called kappa, iota and lambda. Kappa carrageenan is a polymer of l,3-linked D-galactose-4-sulphate and l,4-linked 3,6-anhydro-D-galactose, and forms firm gels particularly in the presence of potassium ions. Iota carrageenan has a structure similar to kappa but with an additional sulphate group in the 2-position of the 3,6-anhydro-D-galactose ring. Iota forms weak gel networks in the presence of calcium ions. Lambda carrageenan has the repeating units l,3-linked D-galactose-2-sulphate and l,4-linked D-galactose-2,6-disulphate and does not form gels. All three carrageenan types form complexes with lecithin through their sulphate groups. Both kappa and iota carrageenans can also be made to stabilise disperse systems by forming networks with certain cations.

Considering the emulsifier/stabiliser system of the invention is that formed between lecithin and carrageenan, the interactions between lecithin and carrageenan can be demonstrated by measuring changes in turbidity in dilute aqueous systems. Lecithin disperses readily in water to produce a fine dispersion of droplets called liposomes. Such dispersion has turbidity which can be measured in terms of absorbance units at 500 nm using a spectrophotometer. Lecithin in water has almost constant turbidity in the pH range 4-8 but turbidity increases sharply below pH 4. The addition of carrageenan to lecithin dispersed in water results in an increase in turbidity over the whole pH range with a shallow maximum at pH 6. These results are shown in Table I.

TABLE 1.    The effect of kappa carrageenan on the turbidity of a dispersion of lecithin in water over a range of pH.

| Sample | Absorbance at 500 nm | | | | | | |
|---|---|---|---|---|---|---|---|
| | pH 2 | pH 3 | pH 4 | pH 5 | pH 6 | pH 7 | pH 8 |
| Carrageenan (0.05%) | 0.004 | 0.002 | 0.003 | 0.002 | 0.002 | 0.002 | 0.002 |
| Lecithin (0.05%) | 0.98 | 0.25 | 0.19 | 0.17 | 0.16 | 0.15 | 0.14 |
| Carrageenan (0.05%)/ Lecithin (0.05%) mix | 1.41 | 0.69 | 0.39 | 0.30 | 0.38 | 0.35 | 0.36 |

Emulsions of maize oil (20%) in water can be prepared using lecithin/carrageenan mixtures in the aqueous phase. Emulsification cannot be achieved if the lecithin is added to the oil first before the addition of the oil to the water containing the carrageenan. The lecithin/carrageenan mixture is therefore prepared first in the aqueous phase before addition and emulsification of the oil.

A lecithin/carrageenan mixture can be made by dispersing lecithin in water using gentle agitation for I hour. The carrageenan is added and dissolved by bringing the water to the boil. The aqueous system is then cooled and the oil added.

An emulsion is conveniently prepared by first making an emulsion of oil in water using a high-speed mixer such as a Silversen Mixer. The droplet size of this emulsion can then be reduced to a standard size range (O.5-2 µm) by four consecutive passes through an ultrasonic homogeniser such as a Minisonic. Samples of the emulsion can be stored in measuring cylinders and periodically examined for signs of creaming or phase separation.

The effect of the carrageenan upon the emulsifying capacity of the lecithin is quite dramatic and is shown in Table 2.

TABLE 2. The effect of kappa, iota and lambda carrageenans on the creaming rates of 20% oil-in-water emulsions prepared using lecithin (0.1%)/carrageenan (0.2%) mixtures.

| Emulsifier/ stabiliser composition | Volume of cream (ml) formed from 100 ml emulsion after various storage times. | | | | |
| --- | --- | --- | --- | --- | --- |
| | 1hr | 2hr | 3hr | 5hr | 8hr |
| Lecithin (0.1%)/ kappa carrageenan (0.2%) | 82 | 67 | 52 | 42 | 38 |
| Lecithin (0.1%)/ iota carrageenan (0.2%) | 58 | 44 | 41 | 39 | 34 |
| Lecithin (0.1%)/ lambda carrageenan (0.2%) | 98 | 80 | 70 | 61 | 34 |
| Lecithin (0.1%) control | Separation of oil and water phases occurs within 1hr. | | | | |

Emulsions (20% oil-in-water) produced using lecithin only (0.1%) coalesce very rapidly and a complete separation of the oil and water phases occurs within one hour of preparation. Similar emulsions prepared using both lecithin (0.1%) and carrageenan (0.2%) show no tendency towards coalescence and phase separation. However, these emulsions form cream layers after a few hours because of the lack of stabilising network. Generally, the three major carrageenan types show similar effects on the emulsifying capacity of lecithin. The creaming rates observed with lambda carrageenan are slightly slower than those obtained with either kappa or iota carrageenans. This is attributed to the viscosity of lambda carrageenan in solution which is much higher than that associated with the other types of carrageenan.

A phase instead of the aqueous phase, the emulsifying properties recorded in Table 2 are not observed. Instead, separation of the oil phase occurs within one hour of mixing.

The emulsions containing either kappa or iota carrageenan can be stabilised against creaming by including in the aqueous phase a suitable quantity of co-gelling salt. For example, kappa carrageenan forms aggregated networks particularly in the presence of potassium salts, and emulsions containing kappa carrageenan can be prevented from creaming by the addition of potassium chloride. Similarly, emulsions containing iota carrageenan can be stabilised by the addition of soluble calcium salts. Emulsions containing lambda carrageenan cannot be prevented from creaming in this way.

There is generally a threshold concentration of co-gelling salt below which creaming occurs but above which creaming can be eliminated. This relatively sharp transition from creaming to emulsion stability is due to the formation of a three dimensional network with yield properties in the aqueous phase at about that concentration of co-gelling salt. In the case of 20% maize oil emulsified in an aqueous phase containing 0.1% lecithin and 0.2% kappa carrageenan, the concentration of potassium chloride required to prevent creaming is about 0.04%. This effect is shown in Table 3.

TABLE 3. The effect of potassium ion on the creaming rate of a 20% oil-in-water emulsion prepared using a lecithin (0.1%)/kappa carrageenan (0.2%) mixture.

| Potassium chloride concentration (%) | Volume of cream (ml) formed from 100 mls emulsion after various storage times. | | | | |
|---|---|---|---|---|---|
| | 1hr | 2hrs | 3hrs | 5hrs | 8hrs |
| 0.00 | 82 | 67 | 52 | 42 | 38 |
| 0.02 | 87 | 75 | 63 | 45 | 36 |
| 0.04 | 100 | 100 | 100 | 100 | 100 |

Similarly, about 0.04% calcium acetate is required to prevent creaming of a 20% oil-in-water emulsion containing 0.l% lecithin and 0.2% iota carrageenan. This effect is shown in Table 4.

TABLE 4. The effect of calcium ion on the creaming rate of a 20% oil-in-water emulsion prepared using a lecithin (0.1%)/iota carrageenan (0.2%) mixture.

| Calcium acetate concentration (%) | Volume of cream (ml) formed from 100 mls emulsion after various storage times. | | | | |
|---|---|---|---|---|---|
| | 1hr | 2hr | 3hr | 5hr | 8hr |
| 0 | 58 | 44 | 41 | 39 | 34 |
| 0.02 | 98 | 98 | 98 | 98 | 98 |
| 0.04 | 100 | 100 | 100 | 100 | 100 |

Iota carrageenan is particularly suitable for producing stable oil-in-water emulsions because the networks formed in the presence of calcium ions have good long term stability and show no tendency to separate from the aqueous phase or display syneresis. Kappa carrageenan networks, in contrast, have a tendency to aggregate over a long period of time and this eventually leads to syneresis and the appearance of watery domains in the emulsion.

This demonstrates that by bringing together oppositely charged emulsifier and stabiliser components in a controlled way, an interaction can be brought about to produce a complex with unique functional properties. This emulsifier/stabiliser system can be used to produce stable oil-in-water emulsions. The particular emulsifying and stabilising properties exhibited by this system are a direct result of the interaction brought about in the aqueous phase between the charged hydrocolloid component and charged emulsifier. In systems containing lecithin, the interaction and consequent changes in functional properties are not observed in systems in which the lecithin and stabilising hydrocolloid reside in separate phases prior to mixing. The interaction in these cases does not appear to occur across an oil/water interface.

This invention extends to other negatively charged polysaccharides including pectins, alginates, carboxymethyl cellulose and xanthan gum. Neutral polysaccharides such as locust bean gum, guar gum and methyl, or hydroxypropyl, cellulose show no such tendency to interact with lecithin. Negatively charged polysaccharides produced by the chemical modification of materials such as starch and guar gum, which are not permitted in foods, but which have industrial uses, also fall within the scope of this invention. Such materials include carboxymethylated and sulphated forms of both starches and guar gum, and these find industrial applications as, for example, suspending agents for drilling muds used by the oil recovery industry. Preferably substantial regions of the polysaccharide chain carry or are arranged to carry negatively charged substituent groups such as ester sulphate or carboxylate groups. One immediate consequence of this interaction is an increase in the turbidity of the system to reach a constant value after a period of around l5 minutes. For example, the turbidity of a dispersion of lecithin in water increases following the addition of carrageenans, alginate, pectins and carboxymethyl cellulose in the manner shown in Table 5.

TABLE     5.          Turbidities     of     lecithin
(0.05%)/polysaccharide (0.05%) mixtures
measured at 500 nm after 15 minutes.

| Lecithin/polysaccharide | Abosrbance ($\pm$ 0.01) |
|---|---|
| Lecithin only | 0.15 |
| Iota carrageenan/lecithin | 0.35 |
| Kappa carrageenan/lecithin | 0.35 |
| Alginate/lecithin | 0.28 |
| High methoxy pectin/lecithin | 0.21 |
| Low methoxy pectin/lecithin | 0.24 |
| Carboxymethyl cellulose/lecithin | 0.25 |

None of the polysaccharides alone in water produce absorbance values greater than 0.05.

The lecithin/xanthan system is not included in Table 5 because xanthan itself produces highly turbid dispersions in water and this masks any change in turbidity due to interactions with the lecithin component.

The second consequence of interaction between those polysaccharides and lecithin is to improve the emulsifying properties of the lecithin. As in the case of carrageenan, the lecithin/polysaccharide complexes are able to produce stable oil-in-water emulsions which show no sign of oil separation after prolonged storage.

The emulsifying properties are best demonstrated in systems which contain only oil, polysaccharide, lecithin and water. For example, 20% corn oil-in-water emulsions can be prepared using lecithin (0.l%) in conjunction with polysaccharide (0.2%). In the absence of stabilising network structure, these emulsions cream rapidly (depending on the viscosity of the aqueous phase) as is shown in Table 6.

The xanthan gum at 0.2% concentration had a sufficiently high viscosity to produce an adequate network structure in the aqueous phase to prevent creaming. At lower concentrations of xanthan (less than 0.l%) the emulsions creamed in much the same way as those prepared with the other polysaccharides shown in Table 6. This is because xanthan in water is unable to form a stabilising network at low concentrations, except in the presence of locust bean gum.

TABLE 6. The creaming rates of 20% oil-in-water emulsions prepared using lecithin (0.1%)/polysaccharide (0.2%) mixtures.

| Polysaccharide component | Volume of cream from 100 mls emulsion after various storage times | | | | | |
|---|---|---|---|---|---|---|
| | 0 | 1hr | 2hrs | 3hrs | 5hrs | 8hrs |
| None (lecithin only) | Complete separation of oil component within 1 hr | | | | | |
| Alginate | 100 | 68 | 64 | 46 | 44 | 37 |
| Low methoxy pectin | 100 | 48 | 38 | 36 | 34 | 30 |
| High methoxy pectin | 100 | 60 | 42 | 39 | 37 | 30 |
| Carboxymethyl cellulose | 100 | 75 | 47 | 40 | 37 | 30 |
| Xanthan | 100 | 100 | 100 | 100 | 100 | 100 |

Emulsions produced in the presence of lecithin/polysaccharide mixtures can be prevented from creaming by the formation of molecular networks in the polysaccharide component. It has already been described how this can be achieved using potassium salts in the case of kappa carrageenan or calcium salts in the case of iota carrageenan. Stabilisation can also be achieved with polysaccharides of very high molecular weight where entanglement networks are set up at low polysaccharide concentration. The physical manifestation of this is very high solution viscosity and thixotropic flow properties. Examples of such systems are aqueous dispersions of xanthan gum and high viscosity carboxymethyl cellulose. These polysaccharides in conjunction with lecithin are able to produce stable 20% oil-in-water emulsions at concentrations around 0.2%. At lower concentrations (less than 0.1%) insufficient network structure is present to prevent creaming of the emulsion.

Calcium salts can be used to stabilise emulsions containing either alginate or low methoxy pectin. The quantity of calcium salt required for such stabilisation may be critical. For example, a 20% oil-in-water emulsion prepared using a lecithin (0.1%)/alginate (0.2%) system can be prevented from creaming by the addition of 0.03% calcium acetate. Calcium ions bind to the carboxylate groups of different alginate chains thus establishing a cross-linked macromolecular network However, the continued addition of calcium acetate results in a decrease in emulsion stability and an increase in creaming rate. This occurs at calcium acetate levels above 0.04%. Complete stability is achieved in the calcium acetate concentration range 0.03-0.04%. It is likely that the binding of calcium ions to caboxylate groups interferes with the interaction of these groups with the positive choline and ethanolanine groups of lecithin phospholipide. This in turn affects the emulsifying properties of the system. Care must be taken therefore in stabilising emulsions with inorganic salts which interact with the polysaccharide component.

An alternative approach to the prevention of creaming of emulsions produced using lecithin/polysaccharide mixtures is the use of a second polysaccharide capable of interacting with the negatively charged polysaccharide component of the lecithin/polysaccharide system to form network structures. Such a polysaccharide is locust bean gum, a plant seed polysaccharide comprising a l,4-$\beta$-D mannan chain to which is attached single $\alpha$-D-galactopyranosyl rings at the O-6 position of certain of the D-mannopyranosyl moieties of the mannan chain. This polysaccharide associates with certain other polysaccharides, including kappa and iota carrageenans and xanthan gum, in the aqueous phase to form macromolecular networks. The association is thought to involve unsubstituted and sparsely substituted regions of the galactomannan chain which bind to carrageenan and xanthan chains. An advantage of this approach is that the polysaccharide/polysaccharide interactions do not involve the negatively charged groups upon which the interactions with lecithin depend. Therefore, stabilising networks can be formed without affecting the emulsifying capacity of the lecithin/polysaccharide system.

For example, an emulsion (20% corn oil-in-water) formed in the presence of a lecithin (0.1%)/xanthan gum 0.05%) system can be prevented from creaming by the addition of locust bean gum at concentrations as low as 0.005%. Guar gum, a galactomannan like locust bean gum but having a much higher galactose content, does not associate with xanthan gum and cannot therefore be used to stabilise these emulsions (see Table 7).

In acidic solutions, the interaction between xanthan gum and locust bean gum is reduced, except in the presence of sodium chloride. Such emulsions, for example, salad dressing formulations can be stabilised using xanthan/locust bean interactions provided sufficient sodium chloride is present.

TABLE 7. The creaming rates of 20% oil-in-water emulsions prepared using lecithin (0.1%)/xanthan (0.05%)/galactomannan mixtures.

| Polysaccharide component | Volume of cream from 100 mls emulsion after various storage times | | | | |
|---|---|---|---|---|---|
| | 0 | 1hr | 2hrs | 5hrs | 24hrs |
| Xanthan (0.05%) | 100 | 99 | 98 | 95 | 70 |
| Xanthan (0.05%)/locust bean (0.005%) | 100 | 100 | 100 | 100 | 100 |
| Xanthan (0.05%)/guar (0.02%) | 100 | 100 | 98 | 98 | 85 |

Emulsions formed using lecithin/carrageenan systems can also be stabilised against creaming by the addition of locust bean gum which associates also with carrageenan to form macromolecular networks. This applies to both kappa and iota carrageenan but not to lambda carrageenan with which locust bean gum does not interact.

Another example of a polysaccharide/polysaccharide association which can be used to stabilise an emulsion against creaming is that which takes place between alginate and pectin in the absence of calcium ion in acidic conditions (pH 3-4). The alginate/pectin system is already widely exploited in the manufacture of low solids jams. In the present context, an acidic emulsion is produced using a lecithin/alginate system with no calcium ions present. The lecithin/alginate system has good emulsifying properties at low pH despite the fact that protonation of the carboxylate groups of the alginate does reduce the interaction with lecithin to some extent. Calcium cannot be used to stabilise this emulsion since the combination of protonation and calcium binding reduces the degree of interaction with lecithin to the extent that the emulsifying properties are impaired. However such emulsions can be stabilised by the addition of pectin, which under those conditions forms network structures with the alginate without interfering with the interaction between lecithin and alginate. For example, an acidic 20% oil-in-water emulsion prepared using a lecithin (0.1%)/alginate (0.1%) system and containing acetic acid (pH 3) can be stabilised against creaming by the addition of 0.1% pectin.

Macromolecular networks produced by polysaccharide/polysaccharide interactions are particularly useful for stabilising acidic emulsions, in which a combination of salts and acidity can reduce the interaction between lecithin and negatively charged polysaccharide and impair the emulsifying capacity of the system. For example, emulsifying systems comprising lecithin and interacting polysaccharide combinations such as xanthan/locust bean gum, carrageenan/locust bean gum and alginate/pectin are the preferred systems for acidic food and beverage emulsions such as salad dressings, and soft drinks.

The range of lecithin products to which this invention applies includes the refined, oil-free lecithins and all lecithins permitted in foods by EEC legislation. These lecithin products all contain significant amounts of the positively charged phosphatidyl choline and phosphatidyl ethanolamine which are able to interact with negatively charged polysaccharides. Typically, an unrefined lecithin might contain 19-21% phosphatidyl choline (PC), 8-20% phosphatidyl ethanolamine (PE), 5-11% phosphatidyl inositol (PI), 33-5% lipids, 2-5% sterols, 5% carbohydrate and 1% moisture. A refined lecithin might contain 21-23% PC, 21-24% PE, 18-22% PI and less than 3% lipid. In addition, refined, fractionated lecithins having higher proportions of phosphatidyl choline are commercially available. All these lecithins can be used in the present invention.

For example, commercial refined, fractionated lecithins covering a wide range of phospholipid composition have been found to interact with iota carrageenan in the aqueous phase. The phospholipid compositions of these lecithins are shown in Table 8.

These lecithins can be dispersed in water with gentle agitation. Interactions between the lecithins and iota carrageenan can be demonstrated by measuring the change in the turbidity of the system when an aqueous dispersion of each lecithin is mixed with an aqueous solution of iota carrageenan. The turbidity changes due to the formation of a phospholipid/carrageenan complex are shown in Table 9.

TABLE 8. The phospholipid compositions of some refined fractionated lecithins.

| Lecithin | Phospholipid content (%) | | | |
| --- | --- | --- | --- | --- |
| | PC | PE | PI | Other |
| A | 20-23 | 21-24 | 18-22 | - |
| B | 30-32 | 20-25 | 12-17 | - |
| C | 44-47 | 22-25 | 0-3 | 6-10 |
| D | 68-72 | 10-13 | - | 0-4 |

TABLE 9. Turbidities of fractionated lecithin (0.05%) /iota carrageenan (0.05%) mixtures in aqueous phase measured at 500 nm, 15 minutes after mixing.

| Lecithin | Absorbance at 500 nm ($\pm$ 0.01) |
| --- | --- |
| A | 0.13 |
| A/iota carrageenan | 0.21 |
| B | 0.12 |
| B/iota carrageenan | 0.19 |
| C | 0.10 |
| C/iota carrageenan | 0.15 |
| D | 0.08 |
| D/iota carrageenan | 0.17 |

These lecithin/carrageenan systems are capable of producing stable oil-in-water emulsions whereas none of those fractionated lecithins alone has any emulsifying capacity when dispersed in water. Hence, a 20% oil-in-water emulsion prepared using lecithin alone dispersed in the aqueous phase separates into aqueous and oil phases after 24 hours (see Table lO).

When iota carrageenan is incorporated into the aqueous phase together with the lecithin, emulsions are formed which cream in the absence of stabilising network but which do not coalesce to produce an oil phase (see Table II).

TABLE 10. The stability of 20% oil-in-water emulsions prepared using fractionated lecithins (0.1%) dispersed in the aqueous phase.

| Fractionated lecithin | Volume of cream/oil from 100 mls emulsion after 24 hours | |
|---|---|---|
| | Cream | Oil |
| A | 15 | 10 |
| B | 5 | 15 |
| C | 26 | 2 |
| D | 5 | 15 |

TABLE 11. The stability of 20% oil-in-water emulsions prepared using fractionated lecithins (0.1%) dispersed in the aqueous phase together with iota carrageenan (0.2%).

| Lecithin/carrageenan system | Volume of cream/oil from 100 mls emulsion after 24 hours | |
|---|---|---|
| | Cream | Oil |
| A/carrageenan | 30 | 0 |
| B/carrageenan | 32 | 0 |
| C/carrageenan | 28 | 0 |
| D/carrageenan | 36 | 0 |

These changes in emulsifying capacity are brought about by interactions between phospholipids and the carrageenan in the aqueous phase. They are not generally achievable when the lecithin component is dissolved in the oil phase because the interaction with carrageenan apparently cannot take place across the oil/water boundary. This can be demonstrated by attempting to prepare 20% oil-in-water emulsions using the fractionated lecithins (0.1%) dissolved in the oil phase with the carrageenan iota (0.2%) dissolved in the aqueous phase. After 24 hours, total separation of the oil phase occurs in the case of lecithin A and about 50% of the oil separates in the case of lecithin B (see Table 12). Lecithins C and D produce emulsions which show no sign of oil separation but this is no indication of an interaction with carrageenan in the aqueous phase because these lecithins alone produce emulsions when dispersed in the oil phase (see Table 13).

TABLE 12. The stability of 20% oil-in-water emulsions prepared using fractionated lecithins (0.1%) dispersed in the oil phase and iota carrageenan (0.2%) dispersed in the aqueous phase.

| Lecithin component | Volume of cream/oil from 100 mls emulsion after 24 hours | |
|---|---|---|
| | Cream | Oil |
| A | 0 | 20 |
| B | 20 | 10 |
| C | 41 | 0 |
| D | 42 | 0 |

TABLE 13. The stability of 20% oil-in-water emulsions prepared using fractionated lecithins (0.1%) dispersed in the oil phase only.

| Lecithin | Volume of cream/oil from 100 mls emulsion after 24 hours | |
|---|---|---|
| | Cream | Oil |
| A | 20 | 3 |
| B | 5 | 15 |
| C | 28 | 0 |
| D | 30 | 0 |

Other positively charged emulsifiers interact with negatively charged polysaccharides in the aqueous phase to produce complexes with enhanced emulsifying and stabilising properties. Examples of such positively charged emulsifiers are dodecyltrimethyl ammonium bromide (DTAB) and tetraheptyl ammonium bromide (THAB). Neither of these is effective in producing stable oil-in-water emulsions when used alone. When mixed with a negatively charged polysaccharide, however, complexes are formed which have good emulsifying properties. For example, an aqueous solution of DTAB (or THAB) can be prepared by dispersing the emulsifier in cold (or hot) water. When iota carrageenan is added to the solution and dissolved by heating, an increase in turbidity immediately occurs indicating the formation of an insoluble complex. This quickly agglomerates into a dispersion of relatively large aggregates. Oil-in-water emulsions can readily be prepared using these complex systems. For example, 20% corn oil-in-water emulsions can be prepared using 0.1% DTAB (or THAB) with 0.1% iota carrageenan whereas neither DTAB nor THAB is able to produce stable emulsions when used alone (see Table 14).

0 238 330

TABLE 14. The stability of 20% oil-in-water emulsions prepared using DTAB (or THAB) (0.1%)/iota carrageenan (0.2%) complex formed in the aqueous phase.

| Emulsifier/stabiliser system | Volume of cream/oil from 100 mls emulsion after 24 hours | |
|---|---|---|
| | Cream | Oil |
| DTAB alone | 0 | 17 |
| DTAB/iota carrageenan | 40 | 0 |
| THAB alone | 0 | 20 |
| THAB/iota carrageenan | 90 | 0 |

The emulsions can be stabilised against creaming by the addition of a network-forming component which, in the case of iota carrageenan, is calcium ion.

An interesting feature of the DTAB/carragennan and THAB/carragennan systems is that emulsions can also be formed by dispersing the DTAB (or THAB) and carrageenan separately in oil and aqueous phases respectively. This suggests that these emulsifiers, unlike lecithin phospholipids, are able to migrate across oil/water boundary to interact with the carragennan in the aqueous phase. Nevertheless, pre-dispersal of both emulsifier and polysaccharide in the aqueous phase prior to emulsification of the oil phase is the preferred procedure.

The interacting emulsifier/stabiliser systems which form the basis of this invention are not confined to those comprising positively charged emulsifiers and negatively charged polysaccharides although they do form the most preferred group. As one might expect, interactions are also observed in aqueous systems containing negatively charged emulsifiers and positively charged polysaccharides. An example of such a system is that comprising diacetyl tartaric acid ester of a monoglyceride as the negatively charges emulsifier and chitosan as the positively charged polysaccharide. Chitosan is a I-4 linked, 2-amino, 2-deoxy, B-D-glucan and dissolves readily in a weakly acidic aqueous phase. A solution of chitosan can be brought to neutrality without precipitating the chitosan from the solution. When aqueous neutral solutions of diacetyl tartaric acid ester of monoglyceride (0.1%) and chitosan (0.1%) are mixed, an insoluble complex is formed just as occurs in systems comprising positively charged emulsifiers and negatively charged polysaccharides. As this particular emulsifier is effective at producing oil-in-water emulsions on its own, it has not been possible to demonstrate an improvement in emulsifying power, per se, but the interaction strongly suggests the possibility of stabilisation of the emulsion and demonstrates the principle that the interaction occurs between oppositely charged components.

An important application of interactive emulsifier/stabiliser systems is in the preparation of food and beverage emulsions such as meat emulsions, salad dressings, ice-creams, some desserts and confectionery products, flavour oil emulsions and soft drinks. The preferred emulsifier/stabiliser system for such products is the lecithin/negatively charged polysaccharide system. The choice of lecithin and polysaccharide will depend to some extent upon compositional factors such as acidity, salt (sodium chloride) content and sugar level, and also on texture, mouthfeel and shelf-life requirements. In general, there is no restriction on the lecithin and polysaccharides which can be used to prepare food emulsions, but certain precautions need to be taken in the preparation of emulsions containing high levels of acid and salt since these components tend to reduce the degree of interaction which takes place between the lecithin and polysaccharide, and some loss of emulsifying capacity might result.

Consequently, in preparation of acidic emulsion systems, it is necessary to minimise the content of cations such as calcium ions which would normally be used to form stabilising networks with carrageenans, alginates and low methoxy pectins in neutral emulsions. In acid systems, such cations bind to the negatively charged groups on the polysaccharide and reduce the degree of interaction with the lecithin component. It is preferable to stabilise acidic emulsions either by using polysaccharide alone (entanglement networks) or by using polysaccharide/ polysaccharide interactions such as those which occur in carrageenan/locust bean gum, alginate/pectin and xanthan/locust bean gum systems.

12

The method of preparation of acidic emulsions is also important. It is preferable first to bring together the lecithin and polysaccharide components in water so that interaction and complex formation can take place before the system is made acidic and other components added. Once this is done, the acid component, salt, and other components can be added to the system without adversely affecting the existing emulsifier/stabiliser complex. Finally, the oil component is emulsified with the aqueous phase. If the lecithin and polysaccharide components are brought together in the aqueous phase which already contains the acid and salt, then interaction between lecithin and polysaccharide is reduced and the expected emulsifying capacity may not be achieved.

Examples of lecithin/polysaccharide systems used to produce food and beverage emulsions:-

Example 1 - Flavour oil emulsion
    A 20% orange oil emulsion can be prepared using a lecithin/alginate/pectin (pH 3) system.

```
Final composition:-
        oil-free lecithin              0.1%
        high methoxy pectin            0.1%
        mannuronic-type alginate       0.1%
        orange oil                     20  %
        distilled water                79.7%
```

Procedure:-
    The lecithin is dispersed in the water with gentle agitation and allowed to hydrate and disperse for at least l hour. The sodium alginate and pectin components are then added and dissolved by heating to 85°C. After cooling to room temperature, the pH of the solution is adjusted to 3 by the addition of a 50% solution of citric acid. Finally, the orange oil component is emulsified into the aqueous phase using a high speed homogeniser.

Example 2 - Butterscotch syrup
    A pourable butterscotch syrup can be prepared using a lecithin/alginate/pectin (pH 3) system to prevent oil separation whilst maintaining fluidity.

```
Final composition:-
        oil-free lecithin              0.2%
        high methoxyl pectin           0.1%
        mannuronic-type alginate       0.1%

    butter-oil                     10  %
    sucrose                        35  %
    glucose                        35  %
    distilled water                19.6%
```

Procedure:-
    The lecithin is dispersed in the water and allowed to hydrate with gentle agitation for at least l hour. The pectin and alginate components are added and dissolved by heating to 85°C. After cooling, the pH is adjusted to 3 by the addition of a 50% citric acid solution. The sucrose and glucose components are then added and dissolved with heating. The butter oil is melted, added to the aqueous phase and emulsified hot using a high speed homogeniser.

Example 3 - Low-oil salad dressing
    A stable salad dressing formulation having an oil content around l5% can be prepared using a lecithin/iota carrageenan system.

```
Final composition:-
        oil-free lecithin          0.1%
        iota carrageenan           0.2%
        sucrose                   10  %
        sodium chloride            1  %
        5% acetic acid            15  %
        methyl paraben             0.05%
        distilled water           73.7%
        corn oil                  15  %
```

Procedure:-

The lecithin is dispersed in the water and allowed to hydrate for I hour with gentle agitation. The iota carrageenan is added and dissolved with heating to around 85°C. The sugar and paraben are added and dissolved. After cooling, the 5% acetic acid solution is added to the aqueous phase. Finally, the corn oil is emulsified into the aqueous phase using a high speed homogeniser.

## Claims

1. An emulsifier having at least one ionisable chemical group therein, such that in an aqueous solution the emulsifier carries a charge of one sign, characterised in that the emulsifier has been modified by the binding thereto of a polysaccharide stabiliser having at least one ionisable chemical group therein, such that in an aqueous solution the stabiliser carries a charge of the opposite sign.

2. A modified emulsifier as claimed in claim I wherein the emulsifier and the stabiliser are both edible.

3. A modified emulsifier as claimed in claim I wherein the emulsifier carries a positive charge and the stabiliser carries a negative charge.

4. A modified emulsifier as claimed in claim 3 wherein the emulsifier is lecithin.

5. A modified emulsifier as claimed in claim I wherein the stabiliser is capable of forming a macromolecular network in an aqueous solution.

6. A modified emulsifier as claimed in claim 5 wherein the stabiliser is selected from the group consisting of iota carrageenan, kappa carrageenan, a pectin, an alginate, a carboxymethyl cellulose and a xanthan gum.

7. A method of forming a modified emulsifier as claimed in claim I which method comprises combining together in an aqueous medium an emulsifier having at least one ionisable chemical group therein, such that in an aqueous solution the emulsifier carries a charge of one sign, with a polysaccharide stabiliser having at least one ionisable chemical group therein, such that in an aqueous solution the stabiliser carries a charge of the opposite sign.

8. A method as claimed in claim 7 wherein the combining step is carried out with substantially no lipid being present.

9. An aqueous emulsion comprising an aqueous phase, a lipid phase and a modified emulsifier as claimed in claim I.

10. An aqueous emulsion as claimed in claim 9 including a macromolecular network forming agent for the polysaccharide stabiliser.

11. A foodstuff comprising an aqueous emulsion as claim in claim 9.

12. A method of preparing an aqueous emulsion as claimed in claim 9 which method comprises forming a modified emulsion in accordance with a method as claimed in claim 7, and intimately mixing together the modified emulsifier thus formed with a lipid.

13. A method as claimed in claim 12 including the step of adding a macromolecular network forming agent for the polysaccharide stabiliser prior to the addition of the lipid.

14. A method as claimed in claim 12 including the step of adding an acidic component after formation of the modified emulsifier but prior to the addition of lipid.